# EUROPÄISCHE PATENTSCHRIFT

(11) **EP 3 061 143 B1**
(45) Veröffentlichungstag und Bekanntmachung des Hinweises auf die Patenterteilung: **19.09.2018**
(21) Anmeldenummer: 14786914.3
(22) Anmeldetag: 21.10.2014
(51) Int. Cl.: H01M 2/16, H01M 4/73, H01M 10/10

(54) **GITTERANORDNUNG FÜR EINE PLATTENFÖRMIGE BATTERIEELEKTRODE UND AKKUMULATOR**
GRID ARRANGEMENT FOR A PLATE-SHAPED BATTERY ELECTRODE AND STORAGE BATTERY
SYSTÈME DE GRILLE POUR ÉLECTRODE DE BATTERIE EN FORME DE PLAQUE ET ACCUMULATEUR

(30) Priorität: 23.10.2013 DE 102013111667
(43) Veröffentlichungstag der Anmeldung: 31.08.2016
(73) Patentinhaber: Johnson Controls Autobatterie GmbH & Co. KGaA, 30419 Hannover (DE)
(72) Erfinder: KOCH, Ingo, 31789 Hameln (DE); IDE, Bernd, 30419 Hannover (DE); JOHNS, Frank-Thomas, 31157 Sarstedt (DE); STAFFELDT, Armin, 27389 Lauenbrück (DE); DUDENBOSTEL, Andreas, 31535 Neustadt (DE); GÖBBELS, Dirk, 30177 Hannover (DE); FISCHER, Christian, 31535 Neustadt (DE); BAUER, Jürgen, 31141 Hildesheim (DE)
(74) Vertreter: Meissner Bolte Partnerschaft mbB
(86) Internationale Anmeldenummer: PCT/EP2014/072556
(87) Internationale Veröffentlichungsnummer: WO 2015/059146

(56) Entgegenhaltungen:
- CN-U- 201 562 712
- CN-U- 202 094 214
- DE-A1- 3 234 342
- DE-B- 1 007 835

## Beschreibung

Die Erfindung betrifft eine Gitteranordnung für eine plattenförmige Batterieelektrode eines elektrochemischen Akkumulators gemäß dem Oberbegriff des Anspruchs 1. Die Erfindung betrifft außerdem einen Akkumulator gemäß Anspruch 12.

Allgemein betrifft die Erfindung das Gebiet elektrochemischer Akkumulatoren mit plattenförmigen Batterieelektroden, die auch als Elektrodenplatten bezeichnet werden. Solche Akkumulatoren werden insbesondere als Blei-Säure-Akkumulatoren gefertigt. Gitteranordnungen solcher Akkumulatoren sind zum Beispiel in DE 10 2008 029 386 A1, WO 01/04977 A1, DE 1 007 835 B, DE 32 34 342 A1, CN 201 562 712 U oder CN 202 094 214 U beschrieben. Solche Gitteranordnungen werden in der Regel aus Blei hergestellt. Wegen ansteigender Rohstoffpreise und dem Ziel der Gewichtsreduktion elektrochemischer Akkumulatoren ist es wünschenswert die eingesetzte Bleimenge gering zu halten.

Der Erfindung liegt die Aufgabe zugrunde, eine optimierte Gitteranordnung anzugeben, bei der die elektrische Performance eines Akkumulators ohne Steigerung der eingesetzten Rohstoffmengen verbessert werden kann. Ferner soll ein Akkumulator hierfür angegeben werden.

Diese Aufgabe wird durch eine Gitteranordnung gemäß Patentanspruch 1 und durch einen Akkumulator gemäß Patentanspruch 12 gelöst. Vorteilhafte Weiterbildungen sind in den abhängigen Patentansprüchen angegeben.

Die Erfindung hat den Vorteil, dass mittels der Gitteranordnung Akkumulatoren geschaffen werden können, die verbesserte elektrische Leistungsdaten zeigen. So kann insbesondere die Zyklenfestigkeit des Akkumulators gesteigert werden. Die verbesserte Gitteranordnung wirkt sich auch positiv auf die Spannungslage, die Kapazität und den Innenwiderstand des Akkumulators aus.

Erfindungsgemäß verläuft keiner der Gitterstäbe der sechseckförmigen Aussparungen parallel zum oberen Rahmenelement verläuft. Soweit Begriffe wie horizontal, vertikal, oben, unten, oberhalb, unterhalb bzw. waagerecht oder senkrecht verwendet werden, beziehen sich diese auf die Einbaulage der Batterieelektrode in einem elektrochemischen Akkumulator in spezifikationsgemäßer Normallage des Akkumulators. Die spezifikationsgemäße Normallage des Akkumulators wird in der Regel bei einer horizontalen Anordnung des Bodens des Akkumulators eingenommen. In der Regel ist dabei das obere Rahmenelement ebenfalls horizontal angeordnet. Das genannte Merkmal hat den Vorteil, dass das Einbringen der aktiven Masse in die Aussparungen besonders effizient erfolgen kann und sogenannte "Pastierschatten" vermieden werden oder zumindest deutlich reduziert sind. Pastierschatten treten beim Einstreichen der pastösen aktiven Masse in die Aussparungen auf der in Einstreichrichtung rückwärtigen Seite von Gitterstäben auf.

Erfindungsgemäß verläuft keiner der Gitterstäbe der sechseckförmigen Aussparungen senkrecht zum oberen Rahmenelement verläuft. Dies hat ebenfalls den Vorteil, dass das Einbringen der aktiven Masse in die Aussparungen besonders effizient erfolgen kann und die Pastierschatten vermieden werden oder zumindest deutlich reduziert sind.

Die Gitteranordnung kann mit einer pastösen aktiven Masse beschichtet sein, auf der Flüssigkeit aufsaugendes Material angeordnet ist, das zum Aufnehmen eines flüssigen Elektrolyten des Akkumulators eingerichtet ist. In Kombination mit der Sechseck-Anordnung und der Gitterstäbe bzw. der sechseckigen Aussparungen kann ein besonders leistungsfähiger Akkumulator geschaffen werden, insbesondere ein AGM-Akkumulator, der alle Vorteile dieses Akkumulatortyps aufweist und eine vergleichsweise höhere mechanische Belastbarkeit bei geringerer eingesetzter Bleimenge aufweist. AGM steht dabei für absorbant glas mat. Das Flüssigkeit aufsaugende Material kann daher zum Beispiel als Mikroglasvlies-Separator oder als sonstige absorbierende Glasfasermatte ausgebildet sein.

Die Größe der sechseckförmigen Aussparungen kann zum oberen Rahmenelement hin ansteigen. Mit anderen Worten, weiter vom oberen Rahmenelement angeordnete seckseckförmige Aussparungen sind kleiner als näher am oberen Rahmenelement angeordnete sechseckförmige Aussparungen. Die Größe der Aussparungen kann insbesondere durch deren Flächeninhalt bestimmt werden. Ein Vorteil dabei ist, dass die aktive Masse, mit der die Gitteranordnung versehen wird, im Hinblick auf die elektrischen Anforderungen homogener verteilt ist als bei bekannten Gitteranordnungen. So kann bei den sechseckförmigen Aussparungen nahe dem oberen Rahmenelement mehr aktive Masse pro Aussparung untergebracht werden als bei den weiter vom oberen Rahmenelement entfernt angeordneten sechseckförmigen Aussparungen. Simulationen und Versuche haben ergeben, dass damit das Gitter und eine damit gebildete Batterieelektrode ein elektrisch besonders homogenes Verhalten zeigen.

Die Gitterstäbe aller sechseckförmigen Aussparungen können dieselbe Breite oder dieselbe Querschnittsfläche aufweisen. Dies hat den Vorteil, dass eine gleichmäßige Verteilung des Stromflusses durch die Gitterstäbe gefördert wird.

Gemäß einer vorteilhaften Weiterbildung der Erfindung bilden die Gitterstäbe der sechseckförmigen Aussparungen eine Bienenwaben-Struktur des Gitters.

Gemäß einer vorteilhaften Weiterbildung der Erfindung ist die Gitteranordnung als positive Gitteranordnung für eine positive Batterieelektrode ausgebildet. Gemäß einer vorteilhaften Weiterbildung der Erfindung ist die Gitteranordnung ein gestanztes Bleigitter.

Die Gitteranordnung weist wenigstens das obere Rahmenelement auf. Die Gitteranordnung kann zusätzlich ein unteres Rahmenelement, ein linkes und ein rechtes Seitenrahmenelement aufweisen, wobei das obere Rahmenelement über das linke und das rechte Seitenrahmenelement mit dem unteren Rahmenelement verbunden ist. Das Gitter ist dabei innerhalb des Rahmens angeordnet. Hierdurch wird eine Gitteranordnung mit einer erhöhten Robustheit auch in den unteren Bereichen bereitgestellt.

Gemäß einer vorteilhaften Weiterbildung der Erfindung ist die Mehrheit der Winkel zwischen zwei miteinander verbundenen Gitterstäben größer als 90°. Dies ist ebenfalls förderlich für die Einbringung der pastösen aktiven Masse in die Aussparungen. Soweit im Rahmen dieser Anmeldung Winkel in ° (Grad) angegeben werden, so bezieht sich dies auf einen Vollkreis mit 360°.

Gemäß einer vorteilhaften Weiterbildung der Erfindung ist wenigstens ein Teil der sechseckförmigen Aussparungen von sechs Gitterstäben umrandet, von denen vier Gitterstäbe dieselbe Länge haben und zwei Gitterstäbe eine andere Länge als die vier Gitterstäbe mit derselben Länge haben. Dadurch kann eine gestreckte oder "in die Länge gezogene" Sechseckanordnung realisiert werden.

Gemäß einer vorteilhaften Weiterbildung der Erfindung sind die vier Gitterstäbe mit derselben Länge jeweils paarweise an Verbindungspunkten miteinander verbunden. Diese so gebildeten Paare sind über die zwei Gitterstäbe mit der anderen Länge miteinander verbunden.

Gemäß einer vorteilhaften Weiterbildung der Erfindung weist eine durch die Verbindungspunkte verlaufende Gerade einen Winkel von 5° bis 25°, insbesondere von 10° bis 20°, zur Vertikalen auf. Hierdurch kann eine Art zur Seite geneigtes oder gekipptes Sechseck-Gitter gebildet werden, was den Vorteil hat, dass durch die Kippung die Gitterstäbe überwiegend in Richtung des Stromflusses zur Anschlussfahne hin ausgerichtet werden können und damit die elektrischen Eigenschaften der Gitteranordnung weiter verbessert werden.

Gemäß einer vorteilhaften Weiterbildung der Erfindung steigt die Länge der zwei Gitterstäbe mit der anderen Länge zum oberen Rahmenelement hin an. Alternativ kann auch die Größe der Aussparungen zum oberen Rahmenelement hin auf andere Weise gesteigert werden, z. B. durch Erhöhen der Fläche der Aussparung durch Steigerung der Länge aller die Aussparung umgebenden Gitterstäbe.

Gemäß einer vorteilhaften Weiterbildung der Erfindung bleibt die Länge der vier Gitterstäbe mit derselben Länge zum oberen Rahmenelement hin gleich. Mit anderen Worten, die Länge dieser vier Gitterstäbe ist über die vertikale Erstreckung der Gitteranordnung unverändert.

Gemäß einer vorteilhaften Weiterbildung der Erfindung steigt die Größe der sechseckförmigen Aussparungen von einem Anfangswert von 35 bis 45 mm² hin zum oberen Rahmenelement auf einen Endwert von 53 bis 63 mm² an. Dies hat den Vorteil, dass relativ kleine Aussparungen realisiert sind, was wiederum die Performance eines Akkumulators steigert. Die relativ kleinen Aussparungen sind günstig für eine Verminderung des Effekts des Schrumpfens der aktiven Masse, wenn sie aushärtet, und für eine verbesserte Nutzung der aktiven Masse.

Die eingangs genannte Aufgabe wird außerdem gemäß Anspruch 12 gelöst durch einen Akkumulator mit einer Vielzahl von zu einem oder mehreren Elektrodenplattenblöcken zusammengestellten plattenförmigen Batterieelektroden, wobei eine, mehrere oder alle Batterieelektroden eine Gitteranordnung der zuvor beschriebenen Art aufweisen.

Gemäß einer vorteilhaften Weiterbildung der Erfindung ist der Akkumulator mit flüssigem Elektrolyten befüllt. Zwischen Batterieelektroden ist ein Flüssigkeit aufsaugendes Material angeordnet, das den flüssigen Elektrolyten aufnimmt. Das Flüssigkeit aufsaugende Material kann zwischen allen oder nur zwischen einigen Batterieelektroden angeordnet sein. So kann z. B. jede zweite Batterieelektrode in dem Flüssigkeit aufsaugenden Material eingepackt sein. Der Akkumulator kann insbesondere ein AGM-Akkumulator sein.

Die Erfindung wird nachfolgend anhand von Ausführungsbeispielen unter Verwendung von Zeichnungen näher erläutert.

Es zeigen
- Figur 1:: einen Akkumulator sowie dessen Bauteile in einer explosionsartigen Darstellung und
- Figur 2:: eine Gitteranordnung und
- Figur 3:: eine mit einer aktiven Masse versehene Gitteranordnung und
- Figur 4:: das Eintaschen einer mit einer aktiven Masse versehenen Gitteranordnung in einem Separator und
- Figur 5:: eine erfindungsgemäße Gitteranordnung in einer Draufsicht und
- Figur 6:: ein Ausschnitt der Gitteranordnung gemäß Figur 5 in vergrößerter Darstellung.

In den Figuren werden gleiche Bezugszeichen für einander entsprechende Elemente verwendet.

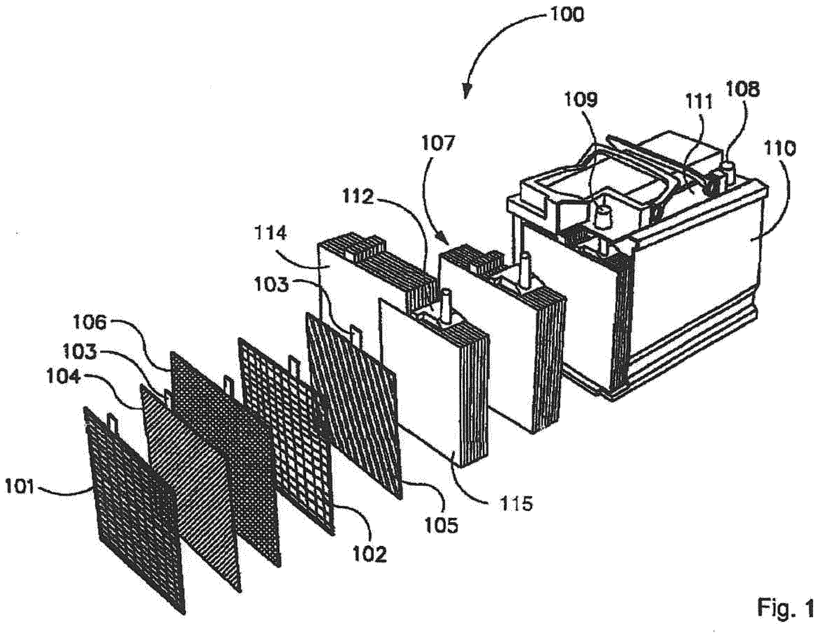

Anhand der Figur 1 sei zunächst der prinzipielle Aufbau eines erfindungsgemäßen Akkumulators 100 beispielhaft erläutert. Der Akkumulator 100 kann insbesondere als Blei-Säure-Batterie mit flüssigem Elektrolyten, z.B. in Form von Schwefelsäure, ausgebildet sein. Der Akkumulator 100 weist ein Gehäuse 110 auf, in dem einer oder mehrere Plattenblöcke 107 angeordnet sind. Der Akkumulator 100 weist eine entsprechend seiner Zellenzahl festgelegte Anzahl von Plattenblöcken 107 auf. Die Plattenblöcke 107 sind jeweils in einzelnen durch Zwischenwände voneinander getrennten Aufnahmekammern des Gehäuses 110 angeordnet. Innerhalb des Gehäuses 110 sind die Plattenblöcke 107 durch in der Figur 1 nicht dargestellte interne Verbinderelemente untereinander zu einer Reihenschaltung verbunden. Die positiven Platten des einen endseitigen Plattenblocks und die negativen Platten des anderen endseitigen Plattenblocks sind mit jeweiligen äußeren Anschlusspolen 108, 109, die sich in einem Deckelteil 111 des Akkumulatorgehäuses 110 befinden, elektrisch verbunden. Durch die Anschlusspole 108, 109 wird die elektrische Energie des Akkumulators 100 für elektrische Energieverbraucher bereitgestellt.

Die Plattenblöcke 107 weisen jeweils alternierend positive und negative Elektrodenplatten auf. Die negativen Elektrodenplatten sind als negativer Plattensatz 115 wiedergegeben, die positiven Elektrodenplatten als positiver Plattensatz 114. In der Figur 1 sind beispielhaft noch einzelne Elektrodenplatten dargestellt, nämlich eine negative Elektrodenplatte 105, die ein negatives ebenes Bleigitter 102 aufweist, und eine positive Elektrodenplatte 104, die ein positives ebenes Bleigitter 101 aufweist. Die in Figur 1 dargestellte positive Elektrodenplatte 104 und die negative Elektrodenplatte 105 weist bereits eine Pastierung mit aktiver Masse auf. Diese deckt die einzelnen Gitterstäbe und Aussparungen ab. Das positive und/oder das negative Bleigitter weist eine Vielzahl von Gitterstäben und eine Vielzahl von zwischen den Gitterstäben gebildeten fensterartigen Aussparungen auf. Das positive und/oder das negative Bleigitter 101, 102 kann z.B. durch einen Stanzprozess hergestellt werden, oder durch andere Verfahren wie Gießen und/oder Walzen.

Die positive Elektrodenplatte 104 ist zusätzlich über ein Separatormaterial 106 von der negativen Elektrodenplatte 105 getrennt. Insbesondere kann das Separatormaterial 106 zu einer Taschenform ausgebildet sein, die die positive Elektrodenplatte 104 aufnimmt und gegenüber benachbarten Elektrodenplatten separiert. Die positiven Elektrodenplatten 104 weisen jeweilige Anschlussfahnen 103 auf, über die die Elektrodenplatten in dem positiven Plattensatz 114 untereinander in einer Parallelschaltung verbunden sind. Die negativen Elektrodenplatten 105 weisen jeweilige Anschlussfahnen 103 auf, über die die Elektrodenplatten in dem negativen Plattensatz 115 untereinander in einer Parallelschaltung verbunden sind. Die Verbindung kann durch einen in Figur 1 erkennbaren Verbinder 112, der auf die Anschlussfahnen 103 gelötet oder geschweißt wird, erfolgen.

Der Akkumulator 100 gemäß Figur 1 kann insbesondere eine oder mehrere erfindungsgemäße Elektrodenplatten aufweisen, z.B. in Form der positiven Elektrodenplatten 104.

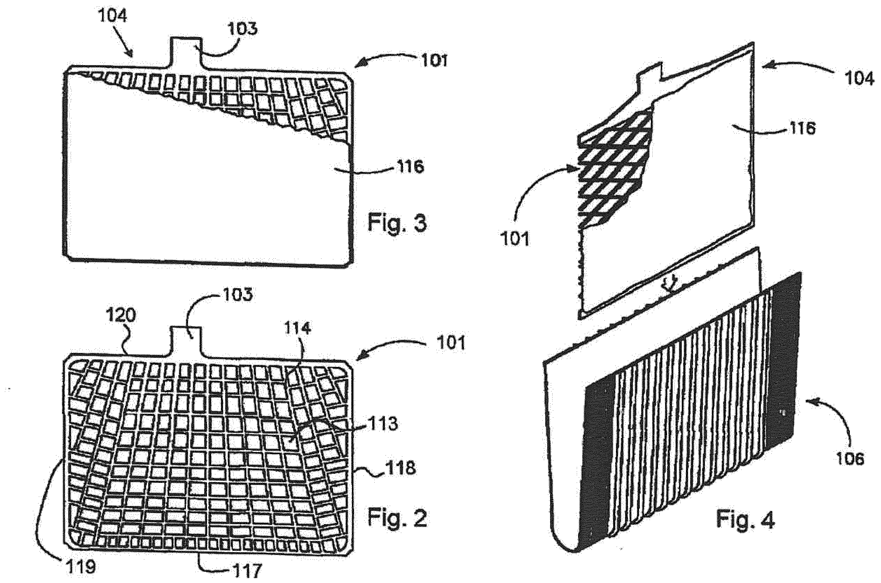

Die Figur 2 zeigt beispielhaft ein positives Bleigitter 101 in einer Draufsicht. Erkennbar ist, dass das Bleigitter 101 eine Vielzahl von Gitterstäben 114 aufweist, zwischen denen eine Vielzahl von fensterartigen Aussparungen 113 vorhanden ist. Zur besseren Handhabbarkeit und zur mechanischen Stabilisierung sowie zur Verbesserung der elektrischen Eigenschaften kann das Bleigitter 101 am äußeren Rand eines, mehrere oder alle der nachfolgend genannten Rahmenteile aufweisen: oberes Rahmenteil 115, linkes Seitenrahmenteil 119, unteres Rahmenteil 117, rechtes Seitenrahmenteil 118.

Die Figur 3 zeigt das Bleigitter 101 aus Figur 2, nachdem es zumindest teilweise bereits mit aktiver Masse, die in der Regel in pastöser Form aufgebracht wird, bedeckt wurde. Dieser Vorgang wird auch als Pastieren bezeichnet. Die Figur 4 zeigt das mit der aktiven Masse versehene Bleigitter 103 gemäß Figur 3 beim Einsetzen in einen taschenförmigen Separator 106.

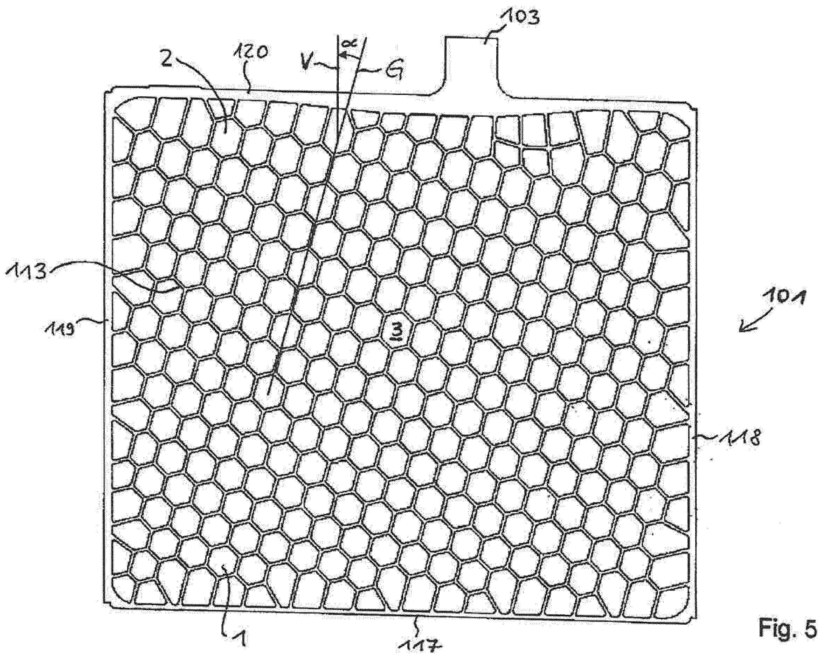

Die Figur 5 zeigt eine erfindungsgemäß ausgebildete Gitteranordnung 101, die wiederum einen Rahmen mit einem oberen Rahmenelement 120, einem unteren Rahmenelement 117, einem rechten Seitenrahmenelement 118 und einem linken Seitenrahmenelement 119 aufweist. Innerhalb des von den zuvor genannten Rahmenelementen umgebenden Bereichs befindet sich das Gitter 113. Das Gitter 113 weist diverse von Gitterstäben umgebene Aussparungen auf. Die Mehrheit der Aussparungen ist sechseckförmig, wie z. B. die beispielhaft mit Bezugszeichen versehenen Aussparungen 1, 2, 3. Der mit sechseckförmigen Aussparungen gebildete Bereich des Gitters 113 endet sozusagen im Übergang zu den Rahmenelementen 117, 118, 119, 120. Wie ferner erkennbar ist, steigt die Größe der Aussparungen von unten her, z. B. von der Aussparung 1 her, zum oberen Rahmenelement 120 hin an, wie durch einen Vergleich der Aussparung 1 mit der Aussparung 2 erkennbar ist. Die Aussparungen sowie die sie umgebenden Gitterstäbe sind in einer Art Bienenwaben-Struktur angeordnet. Die Bienenwaben-Struktur ist dabei nicht exakt mit bestimmten Gitterstäben parallel zu einem der Rahmenelemente 117, 118, 119, 120 ausgerichtet, sondern die gesamte Bienenwaben-Struktur ist sozusagen etwas nach rechts verkippt. Dies ist in der Figur 5 anhand der Geraden G, die um einen dem Verkippwinkel entsprechenden Winkel a gegenüber einer Vertikalen V gedreht ist, erkennbar.

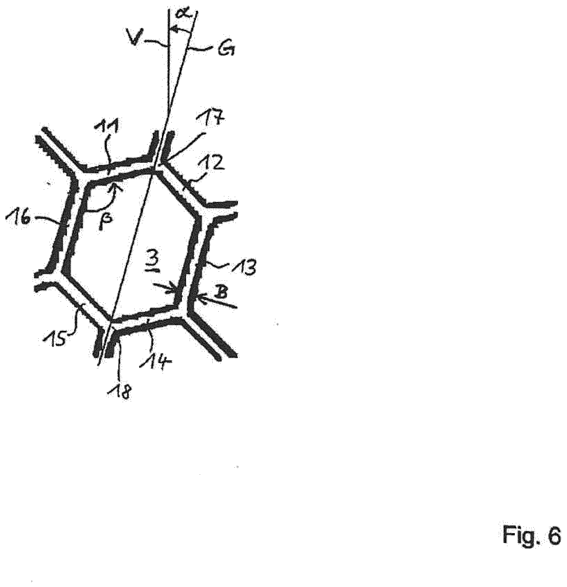

Dies sei nachfolgend anhand der Figur 6, die als Beispiel für sämtliche sechseckförmigen Aussparungen eine vergrößerte Abbildung der Aussparung 3 und der sie umgebenden Gitterstäbe zeigt, erläutert. Erkennbar ist wiederum die Gerade G, die um einen Winkel a gegenüber der Vertikalen V verdreht ist.

Die Aussparung 3 wird von den Gitterstäben 11, 12, 13, 14, 15, 16 umgeben. Hierbei weisen die Gitterstäbe 11, 12, 14, 15 dieselbe Länge auf. Die Gitterstäbe 11, 12 sind miteinander an einem oberen Verbindungspunkt 17 verbunden, die Gitterstäbe 14, 15 sind miteinander an einem unteren Verbindungspunkt 18 verbunden. Die Gerade G verläuft durch die Verbindungspunkte 17, 18.

Die Gitterstäbe 13, 16 weisen jeweils die gleiche Länge auf. Die Länge der Gitterstäbe 13, 16 kann identisch mit der Länge der Gitterstäbe 11, 12, 14, 15 sein, ist jedoch bei der erfindungsgemäßen Gitteranordnung bei diversen Aussparungen eine andere Länge. Insbesondere kann die Länge der Gitterstäbe 13, 16 in der Nähe des unteren Rahmenelements 117 kleiner oder gleich der Länge der Gitterstäbe 11, 12, 14, 15 sein. Die Länge der Gitterstäbe 13, 16 steigt zum oberen Rahmenelement 120 hin an und ist in der Nähe des oberen Rahmenelements 120 gleich oder größer als die Länge der Gitterstäbe 11, 12, 14, 15.

Die Größe der Aussparungen, gemessen in Form von deren Fläche, kann zum Beispiel von einem Wert im Bereich von 35 bis 45 mm², z. B. 40 mm², bei der Aussparung 1 nach oben hin, das heißt zum oberen Rahmenelement 120 hin, auf einen Wert im Bereich von 53 bis 63 mm², insbesondere 58 mm², bei der Aussparung 2 hin ansteigen.

## Patentansprüche

1. Gitteranordnung (101, 102) für eine plattenförmige Batterieelektrode (104, 105) eines elektrochemischen Akkumulators (100), aufweisend einen Rahmen (117, 118, 119, 120) und ein daran angeordnetes Gitter (113), wobei der Rahmen (117, 118, 119, 120) wenigstens ein oberes Rahmenelement (120) aufweist, an dessen dem Gitter (113) abgewandter Seite eine Anschlussfahne (103) der Batterieelektrode (104, 105) angeordnet ist,
wobei das Gitter (113) Gitterstäbe (11 bis 16) aufweist, die jeweils Aussparungen (1, 2, 3) des Gitters (113) umranden, wobei die Mehrheit der die Aussparungen (1, 2, 3) umrandenden Gitterstäbe (11 bis 16) in einer jeweiligen Sechseck-Anordnung angeordnet sind, so dass die dazwischen liegende Aussparung (1, 2, 3) ein Sechseck bildet,
**gekennzeichnet durch**
die folgenden Merkmale:
- keiner der Gitterstäbe (11 bis 16) der sechseckförmigen Aussparungen (1, 2, 3) verläuft parallel zum oberen Rahmenelement (120); und
- keiner der Gitterstäbe (11 bis 16) der sechseckförmigen Aussparungen (1, 2, 3) verläuft senkrecht zum oberen Rahmenelement (120);
sowie optional eines, mehrere oder alle der folgenden Merkmale:
- die Gitteranordnung (113) ist mit einer pastösen aktiven Masse (116) beschichtet, auf der Flüssigkeit aufsaugendes Material (106) angeordnet ist, das zum Aufnehmen eines flüssigen Elektrolyten des Akkumulators (100) eingerichtet ist;
- die Größe der sechseckförmigen Aussparungen (1, 2, 3) steigt zum oberen Rahmenelement (120) hin an;
- die Gitterstäbe aller sechseckförmigen Aussparungen (1, 2, 3) weisen dieselbe Breite (B) oder dieselbe Querschnittsfläche auf.

2. Gitteranordnung nach einem der vorhergehenden Ansprüche, **dadurch gekennzeichnet, dass** die Gitteranordnung (101, 102) als positive Gitteranordnung für ein positive Batterieelektrode (104, 105) ausgebildet ist.

3. Gitteranordnung nach einem der vorhergehenden Ansprüche, **dadurch gekennzeichnet, dass** die Gitteranordnung (101, 102) einen gestanztes Bleigitter ist.

4. Gitteranordnung nach einem der vorhergehenden Ansprüche, **dadurch gekennzeichnet, dass** der Rahmen (117, 118, 119, 120) das obere Rahmenelement (120), ein unteres Rahmenelement (117), ein linkes und ein rechtes Seitenrahmenelement (118, 119) aufweist, wobei das obere Rahmenelement (120) über das linke und das rechte Seitenrahmenelement (118, 119) mit dem unteren Rahmenelement (117) verbunden ist, wobei das Gitter (113) innerhalb des Rahmens (117, 118, 119, 120) angeordnet ist.

5. Gitteranordnung nach einem der vorhergehenden Ansprüche, **dadurch gekennzeichnet, dass** die Mehrheit der Winkel (β) zwischen zwei miteinander verbundenen Gitterstäben (11 bis 16) größer als 90° ist.

6. Gitteranordnung nach einem der vorhergehenden Ansprüche, **dadurch gekennzeichnet, dass** wenigstens ein Teil der sechseckförmigen Aussparungen (1, 2, 3) von 6 Gitterstäben (11 bis 16) umrandet ist, von denen 4 Gitterstäbe (11, 12, 14, 15) dieselbe Länge haben und 2 Gitterstäbe (13, 16) eine andere Länge als die 4 Gitterstäbe (11, 12, 14, 15) mit derselben Länge haben.

7. Gitteranordnung nach Anspruch 6, **dadurch gekennzeichnet, dass** die 4 Gitterstäbe (11, 12, 14, 15) mit derselben Länge jeweils paarweise an Verbindungspunkten (17, 18) miteinander verbunden sind und die so gebildeten Paare über die 2 Gitterstäbe (13, 16) mit der anderen Länge miteinander verbunden sind.

8. Gitteranordnung nach Anspruch 7, **dadurch gekennzeichnet, dass** eine durch die Verbindungspunkte (17, 18) verlaufende Gerade (G) einen Winkel (a) von 5° bis 25°, insbesondere von 10° bis 20°, zur Senkrechten zum oberen Rahmenelement (120) aufweist.

9. Gitteranordnung nach einem der Ansprüche 6 bis 8, **dadurch gekennzeichnet, dass** die Länge der 2 Gitterstäbe (13, 16) mit der anderen Länge zum oberen Rahmenelement (120) hin ansteigt.

10. Gitteranordnung nach einem der Ansprüche 6 bis 9, **dadurch gekennzeichnet, dass** die Länge der 4 Gitterstäbe (11, 12, 14, 15) mit derselben Länge zum oberen Rahmenelement (120) hin gleich bleibt.

11. Gitteranordnung nach einem der vorhergehenden Ansprüche, **dadurch gekennzeichnet, dass** die Größe der sechseckförmigen Aussparungen (1, 2, 3) von einem Anfangswert im Bereich von 35 bis 45 mm² zum oberen Rahmenelement (120) hin auf einen Endwert im Bereich von 53 bis 63 mm² ansteigt.

12. Akkumulator (100) mit einer Vielzahl von zu einem oder mehreren Elektrodenplattenblöcken (107) zusammengestellten plattenförmigen Batterieelektroden (104, 105), wobei eine, mehrere, oder alle Batterieelektroden (104, 105) eine Gitteranordnung (101, 102) nach einem der vorhergehenden Ansprüche aufweisen.

13. Akkumulator nach Anspruch 12, **dadurch gekennzeichnet, dass** der Akkumulator (100) mit flüssigem Elektrolyten befüllt ist und zwischen Batterieelektroden (104, 105) ein Flüssigkeit aufsaugendes Material (106) angeordnet ist, dass den flüssigen Elektrolyten aufnimmt.

## Claims

1. Grid arrangement (101, 102) for a plate-shaped battery electrode (104, 105) of an electrochemical storage battery (100), comprising a frame (117, 118, 119, 120) and a grid (113) arranged thereon, wherein the frame (117, 118, 119, 120) comprises at least one upper frame element (120), on the side of which that faces away from the grid (113) a connecting lug (103) of the battery electrode (104, 105) is arranged,
wherein the grid (113) comprises grid bars (11 to 16), which each surround cut-outs (1, 2, 3) in the grid (113), the majority of the grid bars (11 to 16) that surround the cut-outs (1, 2, 3) being arranged in a respective hexagonal arrangement such that the cut-out (1, 2, 3) lying in between forms a hexagon,
**characterized by**
the following features:
- none of the grid bars (11 to 16) of the hexagonal cut-outs (1, 2, 3) runs parallel to the upper frame element (120); and
- none of the grid bars (11 to 16) of the hexagonal cut-outs (1, 2, 3) runs perpendicularly to the upper frame element (120);
and optionally one or more or all of the following features:
- the grid arrangement (113) is coated with a pasty, active compound (116), on which liquid-absorbing material (106) which is designed to absorb a liquid electrolyte of the storage battery (100) is arranged;
- the size of the hexagonal cut-outs (1, 2, 3) increases towards the upper frame element (120);
- the grid bars of all the hexagonal cut-outs (1, 2, 3) have the same width (B) or the same cross-sectional area.

2. Grid arrangement according to claim 1,
**characterized in that**
the grid arrangement (101, 102) is designed as a positive grid arrangement for a positive battery electrode (104, 105).

3. Grid arrangement according to one of the preceding claims,
**characterized in that**
the grid arrangement (101, 102) is a stamped lead grid.

4. Grid arrangement according to one of the preceding claims,
**characterized in that**
the frame (117, 118, 119, 120) comprises the upper frame element (120), a lower frame element (117), a left and a right side frame element (118, 119), wherein the upper frame element (120) is connected to the lower frame element (117) by way of the left and right side frame elements (118, 119), the grid (113) being arranged within the frame (117, 118, 119, 120).

5. Grid arrangement according to one of the preceding claims,
**characterized in that**
the majority of the angles (β) between two interconnected grid bars (11 to 16) is greater than 90°.

6. Grid arrangement according to one of the preceding claims,
**characterized in that**
at least some of the hexagonal cut-outs (1, 2, 3) are surrounded by 6 grid bars (11 to 16), of which 4 grid bars (11, 12, 14, 15) are of the same length and 2 grid bars (13, 16) are of a different length than the 4 grid bars (11, 12, 14, 15) of the same length.

7. Grid arrangement according to claim 6,
**characterized in that**
the 4 grid bars (11, 12, 14, 15) of the same length are interconnected at connecting points (17, 18) in respective pairs and the pairs thereby formed are interconnected by way of the 2 grid bars (13, 16) of the other length.

8. Grid arrangement according to claim 7,
**characterized in that**
a straight line (G) running through the connecting points (17, 18) is at an angle (a) of 5° to 25°, in particular of 10° to 20°, to the perpendicular to the upper frame element (120).

9. Grid arrangement according to one of claims 6 to 8,
**characterized in that**
the length of the 2 grid bars (13, 16) of the differing length increases towards the upper frame element (120).

10. Grid arrangement according to one of claims 6 to 9,
**characterized in that**
the length of the 4 grid bars (11, 12, 14, 15) of the same length remains the same towards the upper frame element (120).

11. Grid arrangement according to one of the preceding claims,
**characterized in that**
the size of the hexagonal cut-outs (1, 2, 3) increases towards the upper frame element (120) from an initial value in the range of 35 to 45 mm² to an end value in the range of 53 to 63 mm².

12. Storage battery (100) having a plurality of plate-shaped battery electrodes (104, 105) arranged into one or more electrode plate packs (107), wherein one or more or all of the battery electrodes (104, 105) comprise(s) a grid arrangement (101, 102) according to one of the preceding claims.

13. Storage battery according to claim 12,
**characterized in that**
the storage battery (100) is filled with liquid electrolyte and a liquid-absorbing material (106) which absorbs the liquid electrolyte is arranged between the battery electrodes (104, 105).

## Revendications

1. Arrangement de grille (101, 102) pour une électrode de batterie (104, 105) en forme de plaque d'un accumulateur électrochimique (100), possédant un cadre (117, 118, 119, 120) et une grille (113) disposée contre celui-ci, le cadre (117, 118, 119, 120) possédant au moins un élément de cadre supérieur (120) au niveau duquel est disposé le côté opposé à la grille (113) d'une cosse de raccordement (103) de l'électrode de batterie (104, 105),
la grille (113) possédant des barres de grille (11 à 16) qui entourent respectivement des cavités (1, 2, 3) de la grille (113), la majorité des barres de grille (11 à 16) qui entourent les cavités (1, 2, 3) étant respectivement disposées selon un arrangement hexagonal, de sorte que la cavité (1, 2, 3) qui se trouve entre celles-ci forme un hexagone,
**caractérisé par**
les caractéristiques suivantes:
- aucune des barres de grille (11 à 16) des cavités (1, 2, 3) de forme hexagonale ne s'étend parallèlement à l'élément de cadre supérieur (120); et
- aucune des barres de grille (11 à 16) des cavités (1, 2, 3) de forme hexagonale ne s'étend perpendiculairement à l'élément de cadre supérieur (120);
et aussi, en option, plusieurs ou la totalité des caractéristiques suivantes:
- l'arrangement de grille (113) est revêtu d'une masse active (116) pâteuse sur laquelle est disposé un matériau (106) absorbant les liquides qui est conçu pour recueillir un électrolyte liquide de l'accumulateur (100);
- la taille des cavités (1, 2, 3) de forme hexagonale augmente en direction de l'élément de cadre supérieur (120);
- les barres de grille de toutes les cavités (1, 2, 3) de forme hexagonale présentent la même largeur (B) ou la même surface de section transversale.

2. Arrangement de grille selon la revendication 1,
**caractérisé en ce que**
l'arrangement de grille (101, 102) est réalisé sous la forme d'un arrangement de grille positif pour une électrode de batterie (104, 105) positive.

3. Arrangement de grille selon l'une des revendications précédentes,
**caractérisé en ce que**
l'arrangement de grille (101, 102) est une grille en plomb estampée.

4. Arrangement de grille selon l'une des revendications précédentes,
**caractérisé en ce que**
le cadre (117, 118, 119, 120) possède l'élément de cadre supérieur (120), un élément de cadre inférieur (117), un élément de cadre latéral gauche et droit (118, 119), l'élément de cadre supérieur (120) étant relié à l'élément de cadre inférieur (117) par le biais de l'élément de cadre latéral gauche et droit (118, 119), la grille (113) étant disposée à l'intérieur du cadre (117, 118, 119, 120).

5. Arrangement de grille selon l'une des revendications précédentes,
**caractérisé en ce que**
la majorité des angles (β) entre deux barres de grille (11 à 16) reliées ensemble sont supérieurs à 90°.

6. Arrangement de grille selon l'une des revendications précédentes,
**caractérisé en ce qu'**au
moins une partie des cavités (1, 2, 3) de forme hexagonale est entourée de 6 barres de grille (11 à 16), parmi lesquelles 4 barres de grille (11, 12, 14, 15) ont la même longueur et 2 barres de grille (13, 16) ont une longueur différente de celle des 4 barres de grille (11, 12, 14, 15) ayant la même longueur.

7. Arrangement de grille selon la revendication 6,
**caractérisé en ce que**
les 4 barres de grille (11, 12, 14, 15) ayant la même longueur sont respectivement reliées par paire à des points de liaison (17, 18) et les paires ainsi formées sont reliées par le biais des 2 barres de grille (13, 16) ayant l'autre longueur.

8. Arrangement de grille selon la revendication 7,
**caractérisé en ce qu'**une
droite (G) qui passe par les points de liaison (17, 18) présente un angle (a) de 5° à 25°, notamment de 10° à 20°, par rapport aux perpendiculaires de l'élément de cadre supérieur (120).

9. Arrangement de grille selon l'une des revendications 6 à 8,
**caractérisé en ce que**
la longueur des 2 barres de grille (13, 16) ayant l'autre longueur augmente en direction de l'élément de cadre supérieur (120).

10. Arrangement de grille selon l'une des revendications 6 à 9,
**caractérisé en ce que**
la longueur des 4 barres de grille (11, 12, 14, 15) ayant la même longueur reste la même en direction de l'élément de cadre supérieur (120).

11. Arrangement de grille selon l'une des revendications précédentes,
**caractérisé en ce que**
la taille des cavités (1, 2, 3) de forme hexagonale augmente d'une valeur de départ dans la plage de 35 à 45 mm² en direction de l'élément de cadre supérieur (120) jusqu'à une valeur finale dans la plage de 53 à 63 mm².

12. Accumulateur (100) comprenant une pluralité d'électrodes de batterie (104, 105) en forme de plaque assemblées en un ou plusieurs blocs de plaques d'électrode (107), une, plusieurs ou la totalité des électrodes de batterie (104, 105) possédant un arrangement de grille (101, 102) selon l'une des revendications précédentes.

13. Accumulateur selon la revendication 12,
**caractérisé en ce que**
l'accumulateur (100) est rempli d'électrolyte liquide et un matériau (106) absorbant les liquides qui recueille l'électrolyte liquide est disposé entre les électrodes de batterie (104, 105).
